# EUROPEAN PATENT APPLICATION

(11) **EP 4 741 071 A1**
(43) Date of publication of application: **13.05.2026**
(21) Application number: 25211644.7
(22) Date of filing: 28.10.2025
(51) Int. Cl.: B05C 9/06, B05C 5/02, H01M 4/04

(54) **SLOT DIE COATER AND ELECTRODE FOR SECONDARY BATTERY**

(30) Priority: 12.11.2024 KR 20240160066
(71) Applicant: SAMSUNG SDI CO., LTD., Yongin-si, Gyeonggi-do 17084 (KR)
(72) Inventor: AN, Eunjin, 17084 Yongin-Si, Gyeonggi-do (KR); KIM, Sanggi, 17084 Yongin-Si, Gyeonggi-do (KR); KIM, Yongsoo, 17084 Yongin-Si, Gyeonggi-do (KR); KWAK, Junhyeok, 17084 Yongin-Si, Gyeonggi-do (KR); KIM, Hyunchul, 17084 Yongin-Si, Gyeonggi-do (KR); KIM, Yongin, 17084 Yongin-Si, Gyeonggi-do (KR); HONG, Chan, 17084 Yongin-Si, Gyeonggi-do (KR)
(74) Representative: Michalski Hüttermann & Partner Patentanwälte mbB

(57) **Abstract**

A slot die coater includes a first die block on a second die block with a first slot therebetween, the second die block including a first chamber accommodating a mixture, a third die block on the second die block with a second slot therebetween, the third die block including a second chamber accommodating a slurry, a first spacer in the first slot, the first spacer including an inner region connecting the first slot to a first discharge port, the first discharge port setting a width of the mixture discharged and applied from the first discharge port, and a shielding protrusion protruding from the inner region toward the first discharge port, and a second spacer in the second slot, the second spacer including a pocket connecting the second slot to a second discharge port, and the second discharge port overlapping a part of an edge portion of the first discharge port.

## Description

### BACKGROUND

### 1. Field

Aspects of embodiments of the present disclosure relate to a slot die coater and an electrode for a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (for example, home and/or utility scale power storage). A secondary battery generally includes an electrode assembly composed of a positive electrode and a negative electrode, a case accommodating the same, and electrode terminals connected to the electrode assembly.

A slot die coating technique is one of key techniques used to uniformly apply active material slurry onto the electrode substrate in a secondary battery manufacturing process. A slot die coater is able to precisely control the viscosity and coating thickness of the slurry. Thus, the slot die coater can be used to stably produce high-quality electrodes. In a slot die coating process, a slurry applied through a slot of a slot die may be uniformly distributed over the substrate. As a result, such uniform coating directly affects performance and life of a battery.

In a production of the electrodes for the secondary batteries, the slot die coating provides higher precision and consistency than roll coating, and has an advantage of minimizing waste in material. In other embodiments, the slot die coater is able to produce electrodes having various thicknesses by controlling a process speed thereof, and is thus suitable for mass production. A structure of the slot die coater has high mechanical stability and is capable of accurate coating on various substrates in accordance with the flow characteristics of the slurry.

The above information disclosed in this background section is for enhancement of understanding of the background of the present disclosure, and therefore, it may contain information that does not constitute related (or prior) art.

### SUMMARY

According to one or more embodiments of the present disclosure, a slot die coater includes a first die block, a second die block that is combined with the first die block to form a first slot and has a first chamber which accommodates a mixture, a third die block that is combined with the second die block to form a second slot and has a second chamber which accommodates a barrier slurry, a first spacer that is located in the first slot, and a second spacer that is located in the second slot, wherein the first spacer includes an inner region that is connected to a first discharge port configured to determine a width of an applied mixture layer in a case where the mixture is discharged and applied onto a substrate through the first discharge port connected to the first slot, and a shielding protrusion protruding in a direction toward the first discharge port from the inner region, and wherein the second spacer includes a pocket that is connected to a second discharge port which induces the barrier slurry to overlap with at least a part of an edge portion of the applied mixture layer in a case where the barrier slurry is discharged through the second discharge port connected to the second slot.

In an embodiment, the shielding protrusion may be located in an inner center of the first spacer separated from the first discharge port.

In an embodiment, a central portion of the shielding protrusion may protrude to be closest to the first discharge port, and inclined sections symmetric to each other with respect to a center line of the shielding protrusion may be located on both sides of the central portion.

In an embodiment, the first spacer may include a base portion and a plurality of extension portions that extend from one side of the base portion in the direction of the first discharge port, and the shielding protrusion may protrude from the base portion in a direction toward the first discharge port and may be located between the plurality of extension portions.

In an embodiment, terminals of two extension portions located at both ends of the first spacer among the plurality of extension portions may be bent toward a center of the first spacer.

In an embodiment, at least a part of a terminal of an extension portion positioned between the two extension portions, which are located at both ends of the first spacer, may be bent toward at least one of the two extension portions.

In an embodiment, the shielding protrusion may be located between two adjacent extension portions among the plurality of extension portions.

In an embodiment, the second discharge port may overlap with at least a part of both ends of the first discharge port.

In an embodiment, the first slot may be located above the second slot.

In an embodiment, the first slot may be formed horizontally between the first die block and the second die block, and the second slot may be formed between the second die block and the third die block obliquely so as to be closer to the first slot at a position closer to the second discharge port.

In an embodiment, a separation distance in a thickness direction between the first discharge port and the second discharge port may be 0.

In an embodiment, the barrier slurry may contain a water-soluble polymer.

In an embodiment, the water-soluble polymer may contain carboxymethyl cellulose salts.

In an embodiment, the second spacer may include a plurality of pockets that are open toward the second discharge port, and the plurality of pockets may be positioned to correspond to the edge portion of the applied mixture layer.

In an embodiment, the plurality of pockets may extend in a direction opposite to the second discharge port.

According to one or more embodiments of the present disclosure, an electrode for a secondary battery includes a substrate, an applied mixture layer that is formed by applying a mixture, which is discharged through a first slot of the slot die coater as described above, onto the substrate, and barrier films that are formed at both ends of the applied mixture layer by applying a barrier slurry, which is discharged through a second slot of the slot die coater, onto the substrate.

In an embodiment, a maximum thickness of the barrier films on the substrate may be less than a maximum thickness of the applied mixture layer.

In an embodiment, the barrier film may be formed by removing moisture from the barrier slurry.

In an embodiment, a viscosity of the barrier slurry may be equal to or greater than a viscosity of the mixture.

In an embodiment, the mixture may include an electrode active material, a conductive material, and a binder.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a slot die coater and a substrate according to some embodiments of the present disclosure;
FIG. 2 is a cross-sectional view taken along the line AA' of FIG. 1;
FIG. 3 is an exploded perspective view illustrating a slot die coater according to some embodiments of the present disclosure;
FIG. 4 is a drawing schematically illustrating a first spacer according to some embodiments of the present disclosure;
FIG. 5 is a schematic diagram of a first spacer according to some embodiments of the present disclosure;
FIG. 6 is a schematic diagram of a first spacer according to some embodiments of the present disclosure;
FIGS. 7 and 8 are schematic drawings of a second spacer according to some embodiments of the present disclosure;
FIG. 9 is a drawing for explaining effects obtained by the slot die coater according to some embodiments of the present disclosure;
FIG. 10 is a schematic diagram illustrating a cross-section of an electrode for a secondary battery according to some embodiments of the present disclosure;
FIG. 11 is a drawing schematically illustrating an upper surface of an electrode for a secondary battery in (b) of FIG. 10;
FIG. 12 is a schematic drawing of an upper surface of an electrode for a secondary battery according to some embodiments of the present disclosure; and
FIG. 13 is a graph showing results of measuring thicknesses of electrodes manufactured by a slot die coater according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on, " "connected to, " or "combined to" another element or layer, it may be directly on, connected, or combined to the other element or layer or one or more intervening elements or layers may also be present. When an element or layer is referred to as being "directly on, " "directly connected to, " or "directly combined to" another element or layer, there are no intervening elements or layers present. For example, when a first element is described as being "combined" or "connected" to a second element, the first element may be directly combined or connected to the second element or the first element may be indirectly combined or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of, " when preceding a list of elements, modify the entire list of elements and do not modify the individual elements of the list. When phrases such as "at least one of A, B and C, "at least one of A, B or C, " "at least one selected from a group of A, B and C, " or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use, " "using, " and "used" may be considered synonymous with the terms "utilize, " "utilizing, " and "utilized, " respectively. As used herein, the terms "substantially, " "about, " and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath, " "below, " "lower, " "above, " "upper, " and the like, may be used herein for ease of description to describe one element or feature's relationship to another element (s) or feature (s) as illustrated in the figures. It will be understood that the spatially relative terms are intended to encompass different orientations of the device in use or operation in addition to the orientation depicted in the figures. For example, in a case where the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes, " "including, " "comprises, " and/or "comprising, " when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an optional element "above (or below)" or "on (under)" another element may mean that the optional element may be disposed in contact with the upper (or lower) surface of the element, and another element may also be interposed between the element and the optional element disposed on (or under) the element.

In addition, it will be understood that when a component is referred to as being "linked, " "combined, " or "connected" to another component, the elements may be directly "combined, " "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are intended to describe embodiments of the present disclosure and are not intended to limit the present disclosure.

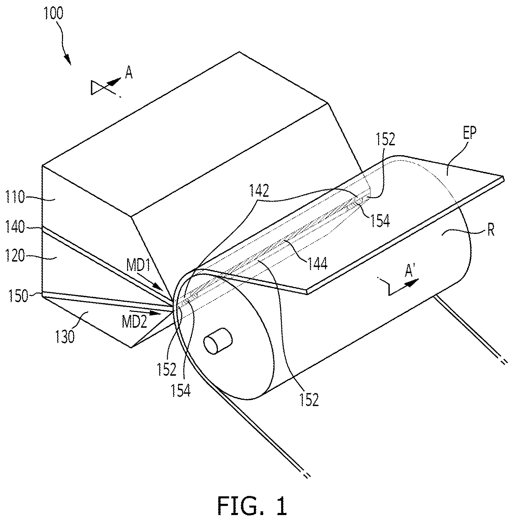

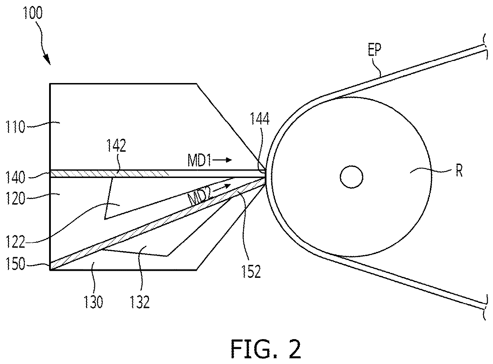

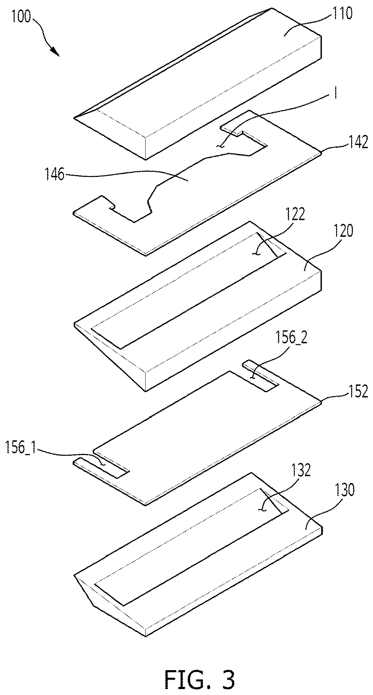

FIG. 1 is a perspective view illustrating a slot die coater and a substrate according to some embodiments of the present disclosure. FIG. 2 is a cross-sectional view taken along the line AA' of FIG. 1. FIG. 3 is an exploded perspective view illustrating a slot die coater according to some embodiments of the present disclosure. FIG. 3 is an exploded perspective view of a slot die coater 100 illustrated in FIGS. 1 and 2.

According to FIGS. 1 to 3, the slot die coater 100 is illustrated as being horizontally disposed, but other configurations are possible, e.g., the slot die coater 100 may be vertically disposed. In other embodiments, a substrate EP may be wound on a roll R and conveyed. Hereinafter, the slot die coater 100, which is horizontally disposed on the substrate EP wound around the roll R and conveyed, will be described as an example.

Referring to FIGS. 1 to 3, the slot die coater 100 according to an embodiment of the present disclosure may include a first die block 110, a second die block 120, a third die block 130, a first spacer 142, and a second spacer 152. A first slot 140 may be formed between (e.g., by combining) the first die block 110 and the second die block 120. A second slot 150 may be formed between (e.g., by combining) the second die block 120 and the third die block 130. In FIGS. 1 to 3, the first die block 110 is disposed on the upper side and the third die block 130 is disposed on the lower side. However, the third die block 130 may be disposed on the upper side and the first die block 110 may be disposed on the lower side.

Referring to FIGS. 1 and 2, the slot die coater 100 according to an embodiment may be disposed close to one side of the substrate EP that is wound and conveyed. Therefore, a material, which is discharged through the first discharge port 144 and the second discharge port 154, may be directly coated or applied onto the substrate EP in a specific pattern. The substrate EP may be a reel-type metal thin film or a reel-type metal film. In some embodiments, the substrate EP may be an electrode substrate used in an electrode assembly of the secondary battery. For example, copper (Cu) may be used as a negative electrode substrate, and aluminum (Al), nickel (Ni), and stainless steel may be used as a positive electrode substrate. In an embodiment, the substrate EP may be continuously conveyed by rotation of the roll R, and the slot die coater 100 may continuously apply the mixture and the barrier slurry onto the conveyed substrate EP. The composition and characteristics of the mixture and the barrier slurry applied by the slot die coater 100 will be described later.

As illustrated in FIGS. 1 and 2, in an embodiment, the first die block 110 and the second die block 120 may be assembled with a predetermined separation distance away from each other. Therefore, the first slot 140 may be formed therebetween. In other embodiments, the second die block 120 and the third die block 130 may be assembled with a predetermined separation distance away from each other. Therefore, the second slot 150 may be formed therebetween. The first slot 140 and the second slot 150 may be empty rooms (e.g., empty spaces or cavities) having a constant width or a constant height and may not be connected to each other.

In some embodiments of the present disclosure, the first die block 110 and the second die block 120 each may have a substantial wedge portion shape, of which a thickness gradually decreases toward the first discharge port 144, in a cross-sectional view. In other embodiments, the second die block 120 and the third die block 130 each may have a substantial wedge portion shape, of which a thickness gradually decreases toward the second discharge port 154, in a cross-sectional view. However, the shape of the die block may have various shapes that facilitate applying a material such as a mixture onto a substrate.

Referring to FIG. 1, in an embodiment, the first slot 140 may be formed horizontally between the first die block 110 and the second die block 120. In addition, the second slot 150 may be formed between the second die block 120 and the third die block 130 obliquely so as to be closer to the first slot 140 at a position closer to the second discharge port 154 (e.g., the second slot 150 may be inclined at an acute angle with respect to the first slot 140 to have the first and second discharge ports 144 and 154 adjacent to each other). However, the shapes of the first slot 140 and the second slot 150 may vary, e.g., if the two slots approach so as to be close to each other on one side in the slot die coater 100, each slot may have various inclinations on the basis of the cross-section as in FIG. 2.

The first discharge port 144 may refer to an inlet defined by a combination of the first die block 110, the second die block 120, and the first spacer 142. In other embodiments, the second discharge port 154 may refer to an inlet defined by a combination of the second die block 120, the third die block 130, and the second spacer 152. In an embodiment, the mixture may be discharged in a direction MD1 through the first discharge port (e.g., in a direction perpendicular to the surface of the substrate EP). The barrier slurry may be discharged in a direction MD2 through the second discharge port (e.g., in a direction at an oblique angle with respect to the surface of the substrate EP).

Referring to FIG. 1, a transverse length of the first discharge port 144 may determine (e.g., may set) a width of the applied mixture layer in which the mixture is applied onto the substrate EP. The applied mixture layer may mean a region in which the mixture is applied onto the substrate. As described later, the transverse length of the first discharge port 144 may differ depending on the structure of the first spacer 142. In other embodiments, the second discharge ports 154 may be at least two or more, and the separation distance between the second discharge ports 154 may differ depending on the structure of the second spacer 152, as described later.

Referring to FIG. 2, the first slot 140 may be connected to a first chamber 122 which accommodates the mixture. The first chamber 122 may be formed in the second die block 120. Accordingly, the mixture accommodated in the first chamber 122 to be supplied may move to the first slot 140, and the mixture may be discharged in the direction MD1 of the first discharge port 144 connected to the first slot 140 by the pressure applied from the first chamber 122. In other embodiments, the second slot 150 may be connected to a second chamber 132 which accommodates the barrier slurry. The second chamber 132 may be formed in the third die block 130. Accordingly, the barrier slurry accommodated in the second chamber 132 to be supplied may move to the second slot 150, and the barrier slurry may be discharged in the direction MD2 of the second discharge port 154 connected to the second slot 150 by the pressure applied from the second chamber 132.

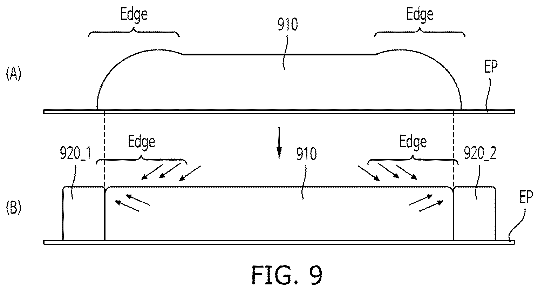

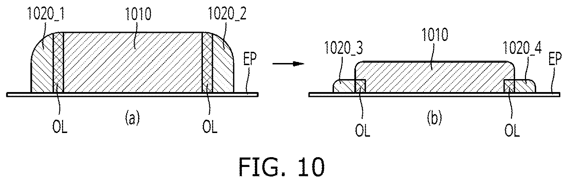

The mixture may be continuously supplied into the first chamber 122 through a flow path. In such a manner, the mixture accommodated in the first chamber 122 may flow into the first slot 140. The barrier slurry may be continuously supplied into the second chamber 132 through a flow path, and the barrier slurry accommodated in the second chamber 132 may flow into the second slot 150. The barrier slurry will be described later with reference to FIGS. 9 and 10. The installation locations and shapes of the above-mentioned flow path connected to the first chamber 122 and the second chamber 132 may vary.

In an embodiment, the mixture may include an electrode active material, a conductive material, a binder, and the like. In a case of a positive electrode for a lithium secondary battery, the positive electrode mixture layer may include a positive electrode active material and may further include a binder and/or a conductive material. In a case of a negative electrode, the negative electrode mixture layer may include a negative electrode active material and may further include a binder and/or a conductive material. As the positive electrode active material and the negative electrode active material, any active material may be used as long as the material is generally used in the field of secondary battery technology.

The binder has functions of appropriately attaching electrode active material particles to each other and appropriately attaching the electrode active material to a substrate (or current collector). For example, the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like. However, the present disclosure is not limited thereto.

The conductive material may be used to make the electrode conductive. Any one of various electronically conductive materials may be selected and used as the conductive material in the battery configured using the conductive material, as long as the material does not cause a chemical change. For example, the conductive material may include a carbon material, a metal material , a conductive polymer, or a mixture thereof. The carbon material may be natural graphite, artificial graphite, carbon black, acetylene black, Ketjen black, carbon fiber, carbon nanofiber, carbon nanotube, or the like. The metal material may contain copper, nickel, aluminum, silver, or the like, and may have a form of metal powder or metal fiber. In addition, the conductive polymer may include a polyphenylene derivative or the like.

Referring to FIGS. 1 and 2, the first spacer 142 may be disposed in the first slot 140, and the second spacer 152 may be disposed in the second slot 150. For example, referring to FIG. 3, the first spacer 142 may be disposed between the first die block 110 and the second die block 120 to form the first slot 140. In other embodiments, the second spacer 152 may be disposed between the second die block 120 and the third die block 130 to form the second slot 150.

Referring to FIG. 3, the first spacer 142 according to an embodiment may include an inner region I, which is connected to (e.g., in fluid communication with) the first discharge port 144, and a shielding protrusion 146. The inner region I of the first spacer 142 may be open at the first discharge port 144 and may be a room (e.g., a space or a cavity) which accommodates the mixture. In a case where the mixture is discharged and applied onto the substrate through the first discharge port 144, the inner region I of the first spacer 142 may be configured to determine the width of the applied mixture layer where the mixture is applied. For example, a length of the open region on the first discharge port side among the inner regions (I) may determine the width of the applied mixture layer.

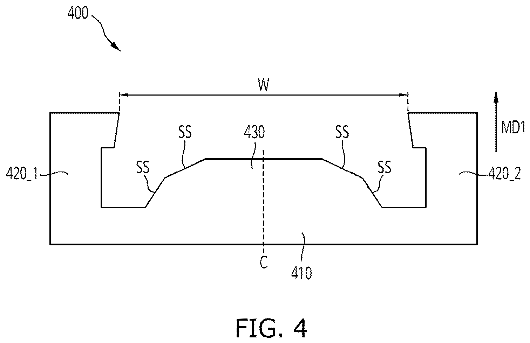

As illustrated in FIG. 3, in an embodiment, the shielding protrusion 146 of the first spacer 142 may protrude from the inner region I toward the first discharge port 144. A specific structure of the shielding protrusion 146 will be described later with reference to FIGS. 4 to 6. The mixture accommodated in the inner region I may be biased (e.g., shifted or diverted) to the edge due to the shielding protrusion 146 in the process of flowing the mixture toward the first discharge port 144. In other embodiments, a size of the inner region I may be relatively large at the edge due to the shielding protrusion 146. Therefore, the amount of the mixture supplied to the edge of the applied mixture layer may be relatively large in a case where the mixture is applied onto the substrate EP.

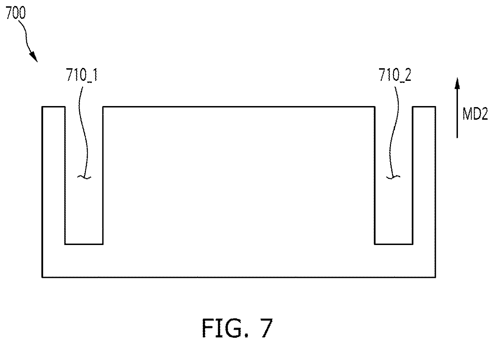

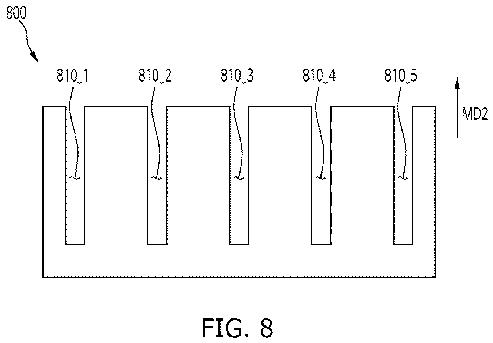

As illustrated in FIG. 3, the second spacer 152 according to an embodiment may include pockets 156_1 and 156_2 connected to second discharge port 154. The second spacer 152 may include a plurality of pockets 156_1 and 156_2. The second discharge port 154 may include a plurality of second discharge ports formed at positions corresponding to the plurality of pockets 156_1 and 156_2 (e.g., the number of second discharge ports 154 may equal the number of pockets 156_1 and 156_2). The plurality of pockets 156_1 and 156_2 may form a plurality of second slots. The barrier slurry may be accommodated in the plurality of pockets 156_1 and 156_2 and discharged through the second discharge port 154 connected to the second slot. In such a case, the pockets 156_1 and 156_2 may induce the barrier slurry to overlap with at least a part of the edge portion of the applied mixture layer formed by the first spacer 142. Here, the edge portion of the applied mixture layer means both ends of the applied mixture layer, and may be a region onto which the mixture tends to be applied in an inclined form. For example, the pockets 156_1 and 156_2 of the second spacer may be disposed such that the barrier slurry is applied to overlap with at least a part of each of the edge portions of both ends of the applied mixture layer. Specific structures of the pockets 156_1 and 156_2 will be described later with reference to FIGS. 7 and 8.

As described above, because the first spacer 142 and the second spacer 152 are disposed, the second discharge ports 154 may overlap with at least a part of both ends (e.g., opposite ends) of the first discharge port 144. For example, as illustrated in FIG. 1, each of the second discharge ports 154 may be disposed to overlap with at least a part of the end of the first discharge port 144 such that the barrier film is formed at the edge portion of the applied mixture layer. A length of the overlapping region between the first discharge port 144 and the second discharge port 154 may be in a range of about 0 mm to 0.5 mm.

Referring to FIGS. 1 and 2, in an embodiment, the first slot 140 may be disposed above the second slot 150. However, the second slot 150 may be disposed above the first slot 140. In other embodiments, the separation distance in the thickness direction between the first discharge port 144 and the second discharge port 154 may be zero (0). However, the first discharge port 144 and the second discharge port 154 may be formed to be separated by a predetermined distance.

As described above, the mixture and the barrier slurry are simultaneously discharged by the slot die coater 100 and applied onto the substrate EP. Thereby, the substrate on which the barrier film is disposed at the edge portion of the applied mixture layer may be manufactured. The phenomenon of rising or sinking is alleviated at the edge portion of the applied mixture layer of the substrate. Therefore, the applied mixture layer may be formed on the substrate with a relatively uniform thickness.

FIG. 4 is a drawing schematically illustrating a first spacer according to some embodiments of the present disclosure. The first spacer 400 illustrated in FIG. 4 may be substantially the same as the first spacer 142 described with reference to FIGS. 1 to 3.

Referring to FIG. 4, in an embodiment, the first spacer 400 may include a base portion 410, extension portions 420_1 and 420_2, and a shielding protrusion 430. As illustrated in FIG. 4, the base portion 410 may be a part of the first spacer 400 that is farthest from the first discharge port 144 (FIG. 1). The plurality of extension portions 420_1 and 420_2 may extend from a same side of the base portion 410 in the direction MD1 of the first discharge port 144 (e.g., the plurality of extension portions 420_1 and 420_2 may extend from the base portion 410 toward the first discharge port 144). The arrangement of the plurality of extension portions 420_1 and 420_2 and the interval between the extension portions may differ depending on the design of the width of the applied mixture layer to be manufactured.

In an embodiment, the shielding protrusion 430 may protrude from the base portion 410 in the direction MD1 of the first discharge port and may be disposed between the plurality of extension portions 420_1 and 420_2 (e.g., the shielding protrusion 430 may protrude from the base portion 410 in a same direction as the plurality of extension portions 420_1 and 420_2). For example, as illustrated in FIG. 4, the number of extension portions 420_1 and 420_2 may be two, and the shielding protrusion 430 may be disposed between the first extension portion 420_1 and the second extension portion 420_2. In other embodiments, the shielding protrusion 430 may be formed at the inner center of the first spacer 400 separated from the first discharge port 144 (FIG. 1). For example, the shielding protrusion 430 may be formed in the inner center of the base portion 410 or in the center between the first extension portion 420_1 and the second extension portion 420_2.

In other embodiments, a central portion of the shielding protrusion 430 may protrude to be closest to the first discharge port 144 (FIG. 1). Inclined sections SS symmetric to each other with respect to the center line c of the shielding protrusion may be formed on both sides (e.g., opposite sides) of the central portion. For example, referring to FIG. 4, the shielding protrusion 430 may include the central portion (e.g., centered between the extension portions 420_1 and 420_2 and having a flat edge extending in parallel to the base portion 410 and facing a center of the first discharge port 144) and the inclined sections SS extending laterally from the central portion. For example, referring to FIG. 4, the central portion with two inclined section SS on each side may define an outer outline of the shielding protrusion 340 that faces the first discharge port 144.

The terminals (e.g., ends or edges) of the extension portions 420_1 and 420_2 according to an embodiment may have forms (e.g., structures) where the terminals are bent in the direction toward the center line c. For example, the terminals of the extension portions 420_1 and 420_2 may be bent at about 90 degrees in the direction toward the center line c (e.g., the terminals of the extension portions 420_1 and 420_2 may be bent toward each other). A width W of the first discharge port 144 (e.g., as measured between the terminals of the extension portions 420_1 and 420_2) may differ depending on lengths of the extension portions 420_1 and 420_2 that are bent and extended in the direction toward the center line c. In some embodiments of the present disclosure, the width of the first discharge port may refer to a length between outermost points facing each other at which portions of the extension portions 420_1 and 420_2 protrude to be the longest in the direction toward the center line c.

In an embodiment, the width W of the first discharge port 144 formed by the terminals of the extension portions 420_1 and 420_2 may be approximately equal to the width of the applied mixture layer formed on the substrate. That is, the width of the applied mixture layer may be adjusted by changing the terminal structures of the extension portions 420_1 and 420_2 (e.g., by adjusting a distance between the terminal structures of the extension portions 420_1 and 420_2). Accordingly, the size of the applied mixture layer may be changed by changing the assembly of the first spacer 400 of the slot die coater 100. Thus, the degree of freedom in design changes may be improved.

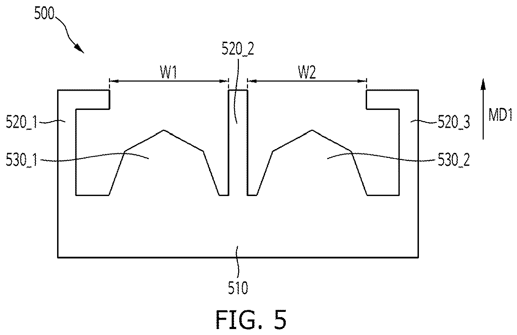

FIG. 5 is a schematic diagram of a first spacer according to some embodiments of the present disclosure. FIG. 5 is a diagram for explaining a first spacer 500 that may form a plurality of applied mixture layers on a substrate by increasing the number of extension portions and shielding protrusions, contrary to the first spacer illustrated in FIG. 4. A description will be given focusing on differences relative to FIG. 4. The first spacer 500 illustrated in FIG. 5 may be substantially the same as the first spacer 142 described with reference to FIGS. 1 to 3.

Referring to FIG. 5, the first spacer 500 according to an embodiment may include a base portion 510, three extension portions 520_1 to 520_3, and two shielding protrusions 530_1 and 530_2. For example, the three extension portions 520_1 to 520_3 may extend from a same side of the base portion 510 with predetermined intervals, and the shielding protrusions 530_1 and 530_2 may be formed between two adjacent extension portions among the plurality of extension portions 520_1 to 520_3, respectively. For example, the first shielding protrusion 530_1 may be formed substantially in the center between the first extension portion 520_1 and the second extension portion 520_2, and the second shielding protrusion 530_2 may be formed substantially in the center between the second extension portion 520_2 and the third extension portion 520_3.

According to an embodiment, the terminals of the two extension portions 520_1 and 520_3 disposed at both ends of the first spacer 500 among the plurality of extension portions 520_1 to 520_3 may be bent toward the center of the first spacer 500. For example, each of the terminals of the first extension portion 520_1 and the terminals of the third extension portion 520_3 may be bent toward the center of the first spacer 500. In such a case, the second extension portion 520_2 may have a form in which the terminal is not bent. A width between the bent terminal of the first extension portion 520_1 and the terminal of the second extension portion 520_2 may determine the width of the first applied mixture layer. In other embodiments, a width between the bent terminal of the third extension portion 520_3 and the terminal of the second extension portion 520_2 may determine the width of the second applied mixture layer.

The first spacer 500 described above may have a structure in which the pockets are disposed to correspond to the terminals of the extension portions. In such a manner, a substrate having a plurality of applied mixture layers and a plurality of barrier films disposed may be manufactured through a slot die coater capable of multi-row coating. For example, in order to improve productivity of a facility for manufacturing the electrode for the secondary battery, an electrode including eight applied mixture layers may be manufactured by using a slot die coater including a first spacer in which nine extension portions and eight shielding protrusions are formed on the base portion.

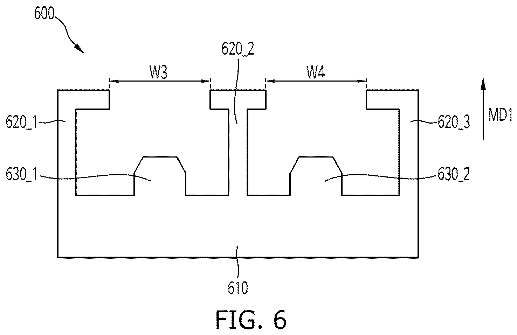

FIG. 6 is a schematic diagram of a first spacer according to some embodiments of the present disclosure. FIG. 6 is a diagram for explaining another embodiment of the first spacer illustrated in FIG. 5. A description will be given focusing on differences relative to FIGS. 4 and 5. The first spacer 600 illustrated in FIG. 6 may be substantially the same as the first spacer 142 described with reference to FIGS. 1 to 3.

Referring to FIG. 6, in an embodiment, at least a part of the terminal of an extension portion 620_2, which is disposed between two extension portions 620_1 and 620_3 disposed at both ends of the first spacer 600 among a plurality of extension portions 620_1 to 620_3, may be bent toward at least one of the two extension portions 620_1 and 620_3 disposed at both ends. In an embodiment, referring to FIG. 6, the first shielding protrusion 630_1 may be formed substantially in the center between the first extension portion 620_1 and the second extension portion 620_2. In addition, the second shielding protrusion 630_2 may be formed substantially in the center between the second extension portion 620_2 and the third extension portion 620_3. For example, one end of the terminal of the second extension portion 620_2 may be bent toward the first extension portion 620_1, and the other end of the terminal of the second extension portion 620_2 may be bent toward the third extension portion 620_3 (e.g., the terminal of the second extension portion 620_2 may have a T-shape).

For example, a width W3 between the bent terminal of the first extension portion 620_1 and the terminal of the second extension portion 620_2 bent toward the first extension portion 620_1 may determine the width of the first applied mixture layer. In other embodiments, a width W4 between the bent terminal of the third extension portion 620_3 and the terminal of the second extension portion 620_2 bent toward the third extension portion 620_3 may determine the width of the second applied mixture layer.

As described above with reference to FIGS. 5 and 6, a position, to which the mixture accommodated in the internal region I of the first spacer 600 (FIG. 3) is discharged, may be changed depending on the various terminal structures of the extension portions 620_1 to 620_3.

In a case where the shielding protrusion has a shape that protrudes in the direction MD1 of the first discharge port, various shapes may be adopted as illustrated in FIGS. 4 to 6. Here, a flow of the mixture accommodated in the internal region I (FIG. 3) may change depending on the size of the shielding protrusion.

FIGS. 7 and 8 are schematic drawings of a second spacer according to some embodiments of the present disclosure. A second spacer 700 or 800 illustrated in FIG. 7 or 8, respectively, may be substantially the same as the second spacer 152 described above with reference to FIGS. 1 to 3.

Referring to FIGS. 7 and 8, a shape and a size of the second spacer 700 or 800 according to an embodiment may be substantially the same as a shape and a size of those facing the second die block 120 and the third die block 130 in the slot die coater 100. For example, the second spacer 700 or 800 may have a substantially rectangular plate-shaped member.

In other embodiments, the second spacer may include a plurality of pockets which are open toward the second discharge port 154 (FIG. 1). The plurality of pockets may be disposed to correspond to the edge portion of the applied mixture layer (e.g., to the edge portion of the first discharge port 144). The plurality of pockets may extend in a direction opposite to (e.g., oriented away from) the second discharge port (negative MD2 direction).

For example, referring to FIG. 7, the second spacer 700 according to an embodiment may include a first pocket 710_1 and a second pocket 710_2 which are open in the direction MD2 of the second discharge port. Each barrier slurry accommodated in the first pocket 710_1 and the second pocket 710_2 may be discharged in the direction MD2 of the second discharge port. The barrier film formed by the barrier slurry may be disposed at the edge portion of the applied mixture layer.

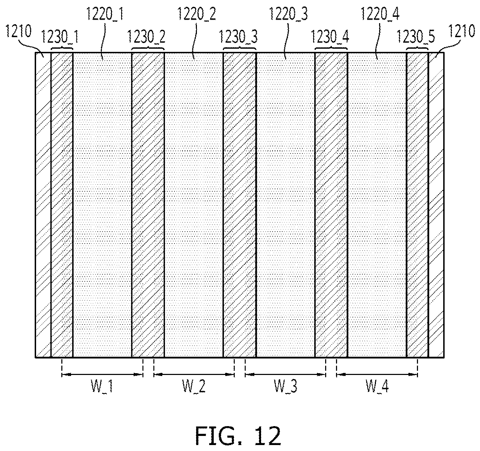

As another example, referring to FIG. 8, the second spacer 800 according to an embodiment may include first to fifth pockets 810_1 to 810_5 that are open in the direction MD2 of the second discharge port. Each barrier slurry accommodated in the first to fifth pockets 810_1 to 810_5 may be discharged in the direction MD2 of the second discharge port. The barrier film formed by the barrier slurry may be disposed at each edge portion of the applied mixture layers. A specific structure of the electrode for the secondary battery, which is manufactured by the slot die coater including the second spacer 800 illustrated in FIG. 8, will be described later with reference to FIG. 12.

FIG. 9 is a drawing for explaining effects obtained by the slot die coater according to some embodiments of the present disclosure. FIG. 9 is a drawing schematically illustrating a cross-section of the electrode for the secondary battery according to some embodiments of the present disclosure. Hereinafter, the electrode for the secondary battery may be manufactured by the slot die coater 100 described above.

Referring to FIG. 9, an electrode for a secondary battery according to an embodiment may include the substrate EP, an applied mixture layer 910, and barrier films 920_1 and 920_2. The substrate EP may be substantially the same as the substrate described with reference to FIGS. 1 to 3. The applied mixture layer 910 may be formed by applying a mixture, which is discharged through a first slot of the slot die coater 100, onto the substrate EP. A width of the applied mixture layer 910 may be approximately equal to a width of the first discharge port connected to the first slot or a length between facing terminals of the two extension portions disposed at both ends of the first spacer.

Edge portions Edge of the mixture may refer to parts of both ends of the mixture applied onto the substrate EP where the mixture surface is likely to have a shape inclined at a predetermined inclination. For example, a thickness or a loading amount of the edge portion Edge of the mixture may be less than a thickness or a loading amount of the mixture in the central portion of the region of the mixture. The central portion refers to a region other than the edge portion Edge. A deviation in thickness or loading amount of the mixture may lead to deterioration in quality of the electrode. In other embodiments, the loading amount of the entire mixture may be less than a designed loading amount of the mixture of the electrode for the secondary battery. For example, the greater the degree of inclination with respect to the thickness direction of the edge portion Edge of the mixture, the less the loading amount of the mixture may be than a design value.

In particular, in a case where the loading amount of the applied negative electrode mixture is less than the design value, an N/P ratio may be less than 1. Therefore, lithium ions from the positive electrode may not be fully accommodated in the negative electrode mixture during charging and discharging of the lithium secondary battery. Thus, the lithium ions may be deposited (plated) as lithium metal. The N/P ratio may mean a value that is obtained by dividing a capacity (mAh/g) of the negative electrode active material by a capacity of the positive electrode active material. As lithium deposition continues according to the charging and discharging of the lithium secondary battery, lithium dendrites may grow on the negative electrode and come into contact with the positive electrode, being likely to cause a short circuit and a fire.

However, in a case of an electrode in which the mixture and the barrier slurry are applied using the slot die coater according to some embodiments of the present disclosure, the inclined shape of the edge portion Edge of the mixture may be reduced. Thereby, quality of the electrode described above may be less likely to deteriorate, and/or a short circuit and a fire in the secondary battery may be less likely to occur.

Referring to part (A) of FIG. 9, the loading amount of the mixture on the edge portion Edge may increase due to the shielding protrusion of the first spacer according to an embodiment. Thus, a phenomenon of rising by a predetermined thickness may occur. However, in a case where the barrier film is not provided, the inclined shape of the edge portion Edge may still be maintained. Thus, the above-mentioned insufficiency in loading amount may not be resolved.

In contrast, referring to part (B) of FIG. 9, in a case where the barrier films 920_1 and 920_2 are formed to overlap with at least a part of the edge portion Edge, the phenomenon of rising of the mixture at the edge portion Edge may be less likely to occur, and the inclinations of the shapes at both ends may be reduced. For example, immediately after the barrier slurry and the mixture are applied onto the substrate EP, the mixture may flow in the direction of the barrier film while the barrier films 920_1 and 920_2 are formed, due to a surface tension between the barrier slurry and the mixture. For example, the mixture of the rising portion of the edge portion Edge may flow substantially downward. At the same time, the mixture occupying the rising portion of the applied mixture layer 910 may flow substantially toward the barrier film due to the surface tension of the barrier films 920_1 and 920_2. Accordingly, a deviation in thickness between the central portion and the edge portion Edge of the mixture may be reduced. Thereby, the quality of the electrode may be improved, and the risk of the short circuit or fire in the secondary battery caused by insufficiency in loading amount of the negative electrode mixture may be reduced.

The barrier films 920_1 and 920_2 according to an embodiment may be formed at both ends of the applied mixture layer 910 by applying the barrier slurry, which is discharged through the second slot of the slot die coater, onto the substrate EP. The material of the barrier slurry may be a material that applies the surface tension to the mixture, may be fixed on the substrate EP, and may induce the flow rate control of the mixture described above. For example, the barrier slurry may include a water-soluble polymer. In some embodiments, the water-soluble polymer may include carboxymethyl cellulose salts.

For example, the barrier slurry may include sodium carboxymethyl cellulose (SCMC), potassium carboxymethyl cellulose (KCMC), calcium carboxymethyl cellulose (CaCMC), ammonium carboxymethyl cellulose (Ammonium Carboxymethyl Cellulose), or a combination thereof.

In an embodiment, a viscosity of the barrier slurry may be equal to or greater than a viscosity of the mixture. For example, the viscosity of the barrier slurry may be in a range of about 0% to 20% greater than the viscosity of the mixture. For example, the barrier slurry and the mixture may be mixed with each other due to the surface tension, improving the inclination shape of the edge portion Edge of the mixture.

FIG. 10 is a schematic diagram illustrating a cross-section of an electrode for a secondary battery according to some embodiments of the present disclosure. A description will be given focusing on differences relative to FIG. 9. Hereinafter, the electrode for the secondary battery may be manufactured by the slot die coater 100 described above.

Referring to FIG. 10, in the electrode for the secondary battery according to an embodiment, an overlapping section OL may be formed in which a region of each of barrier films 1020_1 to 1020_4 overlaps with a region of an applied mixture layer 1010. The overlapping section OL may be a section in which a barrier slurry and a mixture are mixed. In other embodiments, the overlapping section OL may be a section in which moisture is removed from a compound of a barrier slurry and a mixture. A maximum width of the overlapping section OL may be in a range of about 20% to 50% of a maximum width of the barrier film (any one of 1020_1 to 1020_4).

In an embodiment, a maximum thickness of the barrier films 1020_1 to 1020_4 on the substrate EP may be equal to or less than a maximum thickness of the applied mixture layer 1010. Referring to FIG. 10, in the electrode (a) before drying after application using the slot die coater, a maximum thickness of the barrier films 1020_1 and 1020_2 may be equal to or less than a maximum thickness of the applied mixture layer 1010. In the electrode (b) after drying after coating using the slot die coater, a maximum thickness of the barrier films 1020_3 and 1020_4 may be less than the maximum thickness of the applied mixture layer 1010. The barrier films 1020_1 to 1020_4 may be formed by removing moisture from the barrier slurry applied onto the substrate EP through an electrode drying process.

In an embodiment, the thickness of the applied mixture layer 1010 in the electrode (a) before drying after application using the slot die coater may be greater than the thickness of the applied mixture layer 1010 in the electrode (b) after drying after application using the slot die coater.

For example, in the electrode (a) before drying after application using the slot die coater, thicknesses of the barrier films 1020_1 and 1020_2 may be in a range of about 0% to 20% of the thickness of the applied mixture layer 1010. In the electrode (b) after drying after application using the slot die coater, thicknesses of the barrier films 1020_3 and 1020_4 may be in a range of about 0% to 1.5% of the thickness of the applied mixture layer 1010.

Referring to FIGS. 9 and 10, the shape of the barrier film is illustrated as a specific shape. However, the shape may be varied as long as the barrier film may occupy a room such that at least a part of the barrier film overlaps the edge portion Edge of the applied mixture layer.

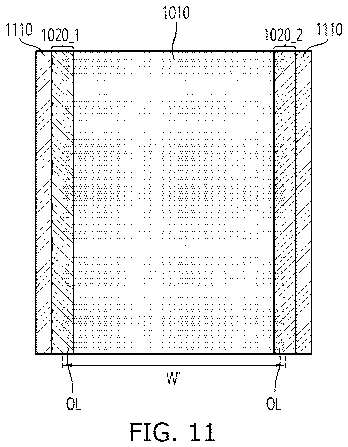

FIG. 11 is a drawing schematically illustrating an upper surface of the electrode for the secondary battery in (b) of FIG. 10. Hereinafter, the electrode for the secondary battery may be manufactured by the slot die coater 100 described above. FIG. 11 is a drawing for explaining a position of the barrier film from which moisture is removed from the barrier slurry through the drying process.

Referring to FIG. 11, in an embodiment, the electrode for the secondary battery may include a applied mixture layer 1010, a barrier film 1020, and non-coated sections 1110. Each non-coated section 1110 may mean a region where no material is applied onto the substrate. For example, the non-coated section 1110 may mean a region other than a region where the barrier film 1020 and/or the applied mixture layer 1010 are disposed on the substrate. The region may be processed into an electrode tab of a secondary battery or may be electrically connected to a separate electrode tab. Here, the electrode tab may serve as a current collector connected to a terminal of the secondary battery.

In an embodiment, the applied mixture layer 1010 may have the overlapping sections OL. The applied mixture layer 1010 may be formed by applying the mixture discharged from the first discharge port (for example, 144 of FIG. 1) of the slot die coater. Each overlapping section OL may be a section in which a region of the applied mixture layer 1010 overlaps with a region of the barrier film 1020. The barrier film 1020 may be formed by applying the barrier slurries discharged from the second discharge port (for example, 154 of FIG. 1) of the slot die coater onto both ends thereof.

In an embodiment, a slot die coater may be configured as follows. A first spacer (for example, 400 of FIG. 4) may include two extension portions (for example, 420_1, 420_2 of FIG. 4), a second spacer (for example, 700 of FIG. 7) may include two pockets (for example, 710_1, 710_2 of FIG. 7), and the two pockets are disposed such that terminals of the two extension portions correspond to each other. By using the slot die coater, an electrode, in which the barrier films 1020 are disposed at both ends of the applied mixture layer 1010, may be manufactured as illustrated in FIG. 11.

In an embodiment, a width W' of the applied mixture layer may be determined by the width between the terminals of the extension portions of the first spacer (for example, W of FIG. 4). In other embodiments, the width W' of the applied mixture layer may be determined by the width of the first discharge port (for example, 144 in FIG. 1).

FIG. 12 is a schematic drawing of an upper surface of an electrode for a secondary battery according to some embodiments of the present disclosure. FIG. 12 shows another embodiment of the electrode for the secondary battery illustrated in FIG. 11.

Referring to FIG. 12, in an embodiment, a slot die coater may be configured as follows. A first spacer includes five extension portions, a second spacer (for example, 800 of FIG. 8) includes five pockets (for example, 810_1 to 810_5 of FIG. 8), and the five pockets are disposed to respectively correspond to terminals of the five extension portions. By using the slot die coater, a multi-row-coated electrode, in which four applied mixture layers (1220_1 to 1220_4) and five barrier films (1230_1 to 1230_5) are arranged, may be manufactured, as illustrated in FIG. 12.

In an embodiment, widths W_1 to W_4 of the applied mixture layers may be determined by the widths between the terminals of adjacent extension portions among the five extension portions of the first spacer. In other embodiments, the width W_1 to W_4 of the applied mixture layers may be determined by the widths of the five first discharge ports.

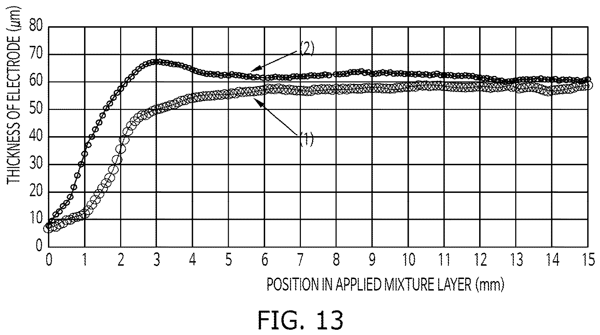

FIG. 13 is a drawing showing results of measuring thicknesses of electrodes manufactured by the slot die coater. FIG. 13 is a graph showing the results of measuring the thicknesses of the electrodes for the secondary battery according to the positions in the applied mixture layers. The X-axis of the graph represents the position in the applied mixture layer (mm), and the Y-axis represents the thickness of the electrode (µm). Here, the position in the applied mixture layer represents the length from one end of the edge portion of the applied mixture layer, and the thickness of the electrode means the total thickness of the substrate and the applied mixture layer. Further, the position in the applied mixture layer is only illustrated as a part of the central portion of the applied mixture layer.

Referring to FIG. 13, a thickness evaluation result (1) of the electrode for the secondary battery according to a 1st example in FIG. 13 shows a result of sampling one applied mixture layer in an 8-row-coated electrode, in which the barrier film is adopted in the applied mixture layer formed by the 1st spacer including the shielding protrusion, and measuring the thickness (µm) of the electrode in the applied mixture layer. A thickness evaluation result (2) of the electrode for the secondary battery according to a 2nd example is the same as that of the 1st example, and shows a result of sampling one applied mixture layer in the 8-row-coated electrode, in which the barrier film is not adopted in the applied mixture layer formed by the 1st spacer including the shielding protrusion, and measuring the thickness (µm) of the electrode in the applied mixture layer.

Referring to the thickness evaluation result (2) of the electrode for the secondary battery according to the second example, the following fact was found. An electrode thickness in a case where the position within the applied mixture layer was in a range of about 0 mm to 5 mm (corresponding to the edge portion of the applied mixture layer) was greater than an electrode thickness in a case where the position within the applied mixture layer was in a range of about 5 mm to 15 mm (corresponding to the central portion of the applied mixture layer). In contrast, referring to the thickness evaluation result (1) of the electrode for the secondary battery according to the first example, the following fact was found. The electrode thickness in a case where the position within the applied mixture layer was in a range of about 0 mm to 5 mm (corresponding to the edge portion of the applied mixture layer) was less than the electrode thickness in a case where the position within the applied mixture layer was in a range of about 5 mm to 15 mm (corresponding to the central portion of the applied mixture layer). In such a manner, it was found that the phenomenon of rising at the edge portion of the applied mixture layer was improved by adopting the barrier film.

According to some embodiments of the present disclosure, a substrate on which a barrier film is disposed at an edge portion of an applied mixture layer may be manufactured by simultaneously discharging a mixture and a barrier slurry through a slot die coater and applying the mixture and the barrier slurry onto a substrate. The phenomenon of rising or sinking at the edge portion of the applied mixture layer of the substrate may be relatively alleviated. Therefore, the applied mixture layer may be formed on the substrate with a relatively uniform thickness.

According to some embodiments of the present disclosure, in a case of an electrode in which the mixture and the barrier slurry are applied using the slot die coater, an inclination of a shape of the edge portion of the mixture in the thickness direction may be reduced. Therefore, it is possible to reduce probabilities of deterioration in quality of the electrode and/or a short circuit or fire in the secondary battery.

According to some embodiments of the present disclosure, a size of the applied mixture layer and/or a size of the barrier film applied onto the substrate may be changed by changing and assembling the first spacer or the second spacer of the slot die coater. Therefore, it is possible to increase a degree of freedom in changing the design of the slot die coater.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A slot die coater (100), comprising:
a first die block (110);
a second die block (120) on the first die block (110), the second die block (120) including a first chamber (122) configured for accommodating a mixture;
a first slot (140) between the first die block (110) and the second die block (120);
a third die block (130) on the second die block (120), the third die block (130) including a second chamber (132) configured for accommodating a barrier slurry;
a second slot (150) between the third die block (130) and the second die block (120);
a first spacer (142) in the first slot (140), and
a second spacer (152) in the second slot (150),
wherein the first spacer (142) includes:
an inner region (I) connecting the first slot (140) to a first discharge port (144), the first discharge port (144) configured for setting a width of the mixture discharged from the first discharge port (144) and applied onto a substrate through the first discharge port (144), and
a shielding protrusion (146) protruding from the inner region (I) toward the first discharge port (144); and
wherein the second spacer (152) includes a pocket connecting the second slot (150) to a second discharge port (154), and wherein the second discharge port (154) overlaps with at least a part of an edge portion of the first discharge port (144).

2. The slot die coater (100) as claimed in claim 1, wherein the shielding protrusion (146) is in an inner center of the first spacer (142), the shielding protrusion (146) being separated from the first discharge port (144).

3. The slot die coater (100) as claimed in any of claims 1 or 2, wherein a central portion of the shielding protrusion (146) protrudes toward the first discharge port (144), wherein inclined sections symmetric to each other with respect to a center line of the shielding protrusion (146) are on opposite sides of the central portion.

4. The slot die coater (100) as claimed in any of claims 1 to 3, wherein:
the first spacer (142) includes a base portion (410) and extension portions (420) that extend from one side of the base portion (410) toward the first discharge port (144), and
the shielding protrusion (146) protrudes from the base portion (410) toward the first discharge port (144), the shielding protrusion (146) being between the extension portions (420).

5. The slot die coater (100) as claimed in claim 4, wherein terminals of two of the extension portions (420) at opposite ends of the first spacer (142), respectively, are bent towards a center of the first spacer (142).

6. The slot die coater (100) as claimed in claim 5, wherein at least a part of a terminal of one of the extension portions (420) positioned between the two of the extension portions (420), which are at opposite ends of the first spacer (142), is bent toward at least one of the two extension portions (420).

7. The slot die coater (100) as claimed in any of claims 4 to 6, wherein the shielding protrusion (146) is between two adjacent ones of the extension portions (420).

8. The slot die coater (100) as claimed in any of claims 1 to 7, wherein the second discharge port (154) overlaps with at least a part of each of opposite ends of the first discharge port (144).

9. The slot die coater (100) as claimed in any of claims 1 to 8, wherein the first slot (140) is with regard to a direction from the third die block (130) to the first die block (110) above the second slot (150).

10. The slot die coater (100) as claimed in claim 9, wherein:
the first slot (140) extends horizontally between the first die block (110) and the second die block (120), and
the second slot (150) extends between the second die block (120) and the third die block (130) at an oblique angle with respect to the first slot (140) so as to be closer to the first slot (140) at a position closer to the second discharge port (154).

11. The slot die coater (100) as claimed in any of claims 1 to 10, wherein a separation distance in a thickness direction between the first discharge port (144) and the second discharge port (154) is 0, the thickness direction relating to a direction from the third die block (130) to the first die block (110).

12. The slot die coater (100) as claimed in any of claims 1 to 11, wherein the second chamber (132) accommodates the barrier slurry and wherein the barrier slurry contains a water-soluble polymer.

13. The slot die coater (100) as claimed in claim 12, wherein the water-soluble polymer contains carboxymethyl cellulose salts.

14. The slot die coater (100) as claimed in any of claims 1 to 13, wherein the second spacer (152) includes pockets that are open toward the second discharge port (154), the pockets corresponding to the edge portion of the first discharge port (144).

15. The slot die coater (100) as claimed in claim 14, wherein the pockets extend in a direction oriented away from the second discharge port (154).
